# EUROPÄISCHE PATENTSCHRIFT

(11) **EP 0 564 468 B1**
(45) Veröffentlichungstag und Bekanntmachung des Hinweises auf die Patenterteilung: **12.07.1995**
(21) Anmeldenummer: 91919781.4
(22) Anmeldetag: 16.11.1991
(51) Int. Cl.: H02P 5/418

(54) **PHASENANSCHNITT-STEUERSCHALTUNG**
PHASE-CONTROL CIRCUIT
CIRCUIT DE COMMANDE A REGLAGE DE PHASE

(30) Priorität: 24.12.1990 DE 4041711
(43) Veröffentlichungstag der Anmeldung: 13.10.1993
(73) Patentinhaber: ROBERT BOSCH GMBH, 70442 Stuttgart (DE)
(72) Erfinder: HORNUNG, Friedrich, D-7000 Stuttgart 80 (DE); HEISLER, Matthias, D-7750 Konstanz (DE)
(86) Internationale Anmeldenummer: DE9100897
(87) Internationale Veröffentlichungsnummer: WO9211688

(56) Entgegenhaltungen:
- DE-A- 3 501 947
- ELEKTRONIK, Bd. 34, Nr. 4, Februar 1985, MUNCHEN, DE, Seiten 86 - 90; W. FRANK:'Phasenanschnittsteuerungen problembezogen'
- RADIO FERNSEHEN ELEKTRONIK, Bd. 37, Nr. 9, 1988, BERLIN, DE, Seiten 564 - 567; D.DAHMS: 'Familie integrierter Schaltungen zur Phasenanschnittsteuerung bzw. Nullspannungsschaltung'

## Beschreibung

### Stand der Technik

Die Erfindung geht aus von einer Steuerschaltung mit einer Phasenanschnittsteuerung für einen Universalmotor nach der Gattung des Hauptanspruchs.

Von Telefunken ist schon eine Steuerschaltung bekannt, die als integrierte Schaltung ausgebildet ist und die Bezeichnung U2008B hat. Diese integrierte Schaltung wird von der gleichgerichteten Netzspannung versorgt. Der Ground-Anschluß ist direkt mit dem zweiten Netzanschluß verbunden. Wenn eine Potentialtrennung zwischen dem Laststromkreis und dem Steuerstromkreis des Triacs benötigt wird, ist ein Übertragungselement wie Optokoppler oder Zündtrafo erforderlich. Dieses zusätzliche Element ist nicht nur relativ teuer, sondern es stellt auch ein zusätzliches Ausfallrisiko dar.

Aus der Zeitschrift Elektronik, W. Frank:
"Phasenanschnittsteuerungen - problembezogen" (Band 34, Nr. 4, Februar 1985, Seiten 86 bis 90) sind Applikationsschaltungen mit ähnlichen integrierten Schaltungen wie U208B, U209B, U210B etc. bekannt. Bei diesen Applikationsschaltungen ist die standardgemäße Verwendung dieser Bausteine vorgesehen. Bei diesen Anwendungen ist der Ground-Anschluß der integrierten Schaltung direkt mit dem zweiten Netzanschluß verbunden.

Aus der Zeitschrift Radio Fernsehen Elektronik, D. Dahms:
"Familie integrierter Schaltungen zur Phasenanschnittsteuerung bzw. Nullspannungsschaltung" (Band 37, Nr. 9, 1988, Seiten 564 bis 567) sind allgemeine Hinweise über den Aufbau und die Verwendung von handelsüblichen integrierten Schaltungen für die Phasenanschnittsteuerung bekannt. In diesen Applikationsschaltungen wird vorgeschlagen, den Ground-Anschluß der integrierten Schaltung ebenfalls direkt mit dem zweiten Netzanschluß zu verbinden.

Aus der DE 35 01 947 A1 wird eine diskret aufgebaute Steuerschaltung für ein Elektrowerkzeug vorgeschlagen, bei der der Strom im Lastkreis des Motors gemessen wird. Ein in Reihe geschalteter Triac wird derart angesteuert, daß ein vorgegebener Stromgrenzwert nicht überschritten werden kann.

### Vorteile der Erfindung

Die erfindungsgemäße Steuerschaltung mit den kennzeichnenden Merkmalen des Hauptanspruchs hat demgegenüber den Vorteil, daß durch den Wegfall des Übertragungselements Kosten eingespart werden. Außerdem vereinfacht sich auch die Leiterbahnführung auf der Leiterplatte in günstiger Weise.

Durch die in den Unteransprüchen aufgeführten Maßnahmen sind vorteilhafte Weiterbildungen und Verbesserungen der im Hauptanspruch angegebenen Steuerschaltung möglich. Eine besonders günstige Anordnung für den Steuerabgriff 31 ergibt sich dadurch, daß auf potentialtrennende Mittel verzichtet werden kann.

Vorteilhaft ist weiter, daß die Motorwicklung als Meßwiderstand verwendbar ist, da dadurch ein Widerstand eingespart wird.

Besonders vorteilhaft ist, wenn in der Steuerschaltung zwischen dem Ground-Anschluß und dem Synchronisieranschluß eine Hilfsquelle geschaltet ist, die bei kleinen Phasenanschnittswinkeln zur Aufrechterhaltung der Synchronisierspannung beiträgt. Eine besonders einfache Lösung ergibt sich für die Hilfsquelle, wenn sie einen Speicherkondensator enthält, der von der Netzspannung ladbar ist. Derartige Kondensatoren benötigen wenig Platz und sind preiswert erhältlich.

Da die Steuerschaltung mit nur wenigen Bauelementen aufbaubar ist und daher nur wenig Platz benötigt, eignet sie sich besonders gut für die Verwendung in Elektrohandwerkzeuge.

Weitere Vorteile der Erfindung sind der Beschreibung entnehmbar.

### Zeichnung

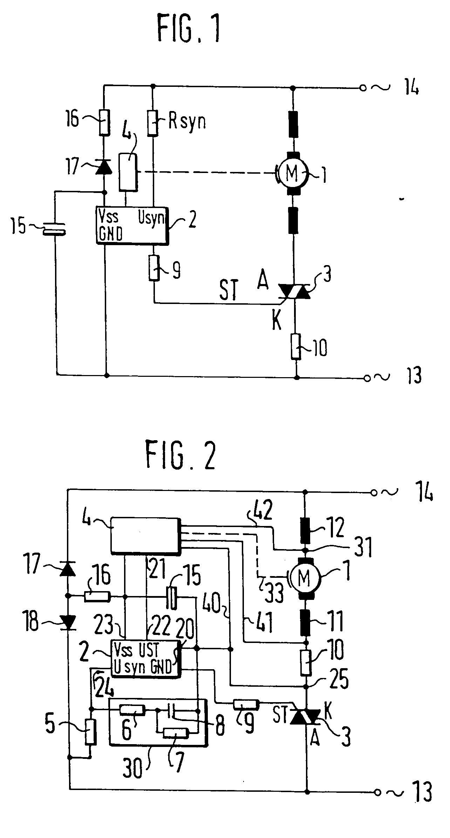

Ein Ausführungsbeispiel der Erfindung ist in der Zeichnung dargestellt und in der nachfolgenden Beschreibung näher erläutert. Es zeigen Figur 1 einen bekannten Stromlaufplan und Figur 2 einen Stromlaufplan des Ausführungsbeispiels.

### Beschreibung des Ausführungsbeispiels

Es ist bekannt, die Steuerschaltung U2008B (Telefunken) gemäß der Figur 1 zur Drehzahlsteuerung eines an einem Wechselspannungsnetz angeschlossenen Elektromotors M einzusetzen, in dessen Lastkreis ein Triac geschaltet ist. Dabei wird die Steuerschaltung an einer Eingangsklemme VSS von einer gleichgerichteten Spannung des Netzes versorgt, wobei ein Ground-Anschluß GND mit einer zweiten Leitung des Netzes verbunden ist. Bei dieser bekannten Schaltung ist hervorzuheben, daß der Ground-Anschluß GND und die Triac-Kathode in Reihe mit dem Meßwiderstand direkt mit dem zweiten Anschluß des Netzes und einem Eingang Usyn über einen Widerstand Rsyn mit dem ersten Anschluß des Netzes verbunden sein muß.

Bei der Schaltungsanordnung gemäß Figur 2 ist eine Steuerschaltung 2 und ein als Triac 3 ausgebildeter Halbleiterschalter invers zur bekannten Schaltungsanordnung 1 geschaltet. An Netzanschlußklemmen 13, 14 ist in einem Laststromkreis ein Elektromotor 1 mit seinen Feldwicklungen 11, 12 über einen Meßwiderstand 10 mit dem Triac 3 in Reihe geschaltet. Der Triac 3 ist kathodenseitig mit dem Meßwiderstand 10 in einem Knotenpunkt 25 verbunden. Im Knotenpunkt 25 ist desweiteren ein Ground-Anschluß 20 der Steuerschaltung 2 angeschlossen. Die Steuerschaltung 2 erhält ihre Spannungsversorgung über einen Eingang 23 von der über Dioden 17, 18 gleichgerichteten Spannung des Netzes. Die gleichgerichtete Spannung wird über einen Vorwiderstand 16 sowohl dem Eingang 23 der Steuerschaltung 2 als auch einem Eingang E eines Reglers 4 zugeführt. Die Spannung wird durch einen Siebkondensator 15 geglättet, der gegen den Ground-Anschluß 20 geschaltet ist. Ein Synchronisiereingang 24 der Steuerschaltung 2 ist über einen Widerstand 5 mit der Triac-Anode und der Anschlußklemme 13 des Netzes verbunden. Zwischen dem Synchronisiereingang 24 und dem Ground-Anschluß 20 ist eine Hilfsquelle 30 geschaltet. Die Hilfsquelle 30 weist einen Widerstand 6 und in Reihe einen Kondensator 8 auf. Parallel zum Kondensator 8 ist ein Widerstand 7 geschaltet. Ein Steuereingang 22 der Steuerschaltung 2 ist mit einem Steuerausgang 21 des Reglers 4 verbunden. Ein Ausgang 21 der Steuerschaltung 2 ist über einen Widerstand 9 mit einem Steuereingang ST des Triacs 3 verbunden. Der Vollständigkeit halber sei noch erwähnt, daß der Regler 4 Meßleitungen 40, 41 aufweist, mit denen der Motorstrom meßbar ist. Die Drehzahl des Motors wird über die gestrichelt dargestellte Leitung 33 erfaßt, zum Beispiel mittels eines Tachogenerators oder direkt an einem Knoten 31 zwischen der Feldspule 12 und dem Anker über die Leitung 43.

Im folgenden wird die Wirkungsweise dieser Schaltungsanordnung beschrieben. Der Ground-Anschluß 20 liegt dann in etwa auf dem Potential des Netzanschlusses 13, solange der Triac 3 leitend ist. Die Versorgung der Steuerschaltung 2 an der Anschlußklemme 23 erfolgt über die Diode 17 und den Widerstand 16.

Während der Sperrphase des Triacs 3 erfolgt die Versorgung der Steuerschaltung 2 über die Diode 18 und den Widerstand 16. Da während der Sperrphase des Triacs 3 der Laststromkreis nahezu stromlos ist, liegt daher der Groundanschluß 20 praktisch auf dem Potential des ersten Netzanschlusses 14. Der Ground-Anschluß 20 floatet also zwischen den Potentialen der Netzanschlüsse 13 und 14.

Die Spannung am Synchronisiereingang 24 entspricht dem Anoden-Kathoden-Potential des Triacs 3 und ist damit abhängig vom Stromflußwinkel des Triacs 3. Um sicherzustellen, daß auch bei großem Stromflußwinkel, d. h. bei einer kurzen Sperrphase des Triacs 3 der Nulldurchgang der Wechselspannung zur Synchronisation der Steuerschaltung ausreicht, ist dem Synchronisiereingang 24 die Hilfsquelle 30 parallel geschalet. Die Hilfsquelle 30 wird in der Sperrphase des Triacs 3 vom Netz aufgeladen und liefert die im Kondensator 8 gespeicherte Energie an den Synchronisiereingang 24. Durch geeignete Wahl der RC-Beschaltung der Hilfsquelle 30 mit den Widerständen 6, 7 kann in vorteilhafter Weise die Restspannung über den Triac 3 auch noch bei einem sehr kleinen Phasenanschnittswinkel nahe 0° zur Erkennung des Nulldurchgangs ausgewertet werden. Dadurch ist die Schaltung praktisch über den gesamten Aussteuerbereich verwendbar. Da in dieser Anordnung der Ground-Anschluß GND mit der Triac-Kathode wie bisher verbunden bleibt, muß der Zündimpuls nicht über ein potential trennendes Element dem Triac zugeführt werden.

Als Regelschaltung 4 kann im einfachsten Fall ein Tachogenerator verwendet werden, der sein Drehzahlsignal am Motor abgreift und eine der Drehzahl proportionale Spannung liefert. Der Regler 4 ist per se bekannt, so daß er nicht näher beschrieben werden muß. Im Ausführungsbeispiel gemäß der Figur 2 wurden zusätzliche Anschlüsse 33, 40, 41 und 42 vorgesehen, mit denen die Spannung am Motor und der Strom am Meßwiderstand 10 erfaßt werden. Mit Hilfe dieser Meßsignale ist eine differenzierte Regelung des Motors möglich.

Statt des Triacs 3 sind auch andere Halbleiterschalter wie Transistoren oder Thyristoren verwendbar.

Anstelle der verwendeten Steuerschaltung U2008B sind auch andere bekannte Steuerschaltungen verwendbar, die entweder als integrierte Schaltung erhältlich sind oder diskret aufgebaut werden können.

## Patentansprüche

1. Schaltungsanordnung für die Steuerung eines Universalmotors an einem Wechselspannungsnetz, mit einem Halbleiterschalter, vorzugsweise einem Triac, der im Laststromkreis des Universalmotors angeordnet ist und dessen Steuereingang mit dem Ausgang einer als integrierte Schaltung ausgebildeten Steuerschaltung verbunden ist, die zur Phasenanschnitt-Steuerung für den Universalmotor ausgebildet ist, wobei das Steuersignal für die Steuerschaltung zwischen einem Steuereingang und einem Ground-Anschluß der Steuerschaltung anlegbar ist und die einen Synchronisiereingang aufweist, der über einen Synchronisierwiderstand mit einer Phase des Wechselspannungsnetzes verbunden ist und mit einer Regelschaltung zur Drehzahlregelung des Universalmotors, dadurch gekennzeichnet, daß das Steuersignal am Motor (1) als Ankerspannung direkt abgreifbar ist, daß der Ground-Anschluß (20) der Steuerschaltung (2) mit einem internen Massepunkt (25) der Schaltungsanordnung verbunden ist, der im Laststromkreis zwischen dem Halbleiterschalter (3) und dem Anker (M) des Universalmotors (1) liegt und daß der Halbleiterschalter (3) invers betrieben wird, wobei er mit seiner Kathode (K) mit dem internen Massepunkt (25) verbunden ist.

2. Schaltungsanordnung nach Anspruch 1, dadurch gekennzeichnet, daß ein Steuerspannungsabgriff (31) vorgesehen ist, der zwischen dem Anker (M) und der Feldwicklung (11) oder (12) angeordnet ist.

3. Schaltungsanordnung nach einem der vorhergehenden Ansprüche, dadurch gekennzeichnet, daß zwischen dem Universalmotor (1) und der Kathode (K) des Halbleiterschalters (3) ein Meßwiderstand (10) geschaltet ist.

4. Schaltungsanordnung nach einem der vorhergehenden Ansprüche, dadurch gekennzeichnet, daß eine Hilfsquelle (30) vorgesehen ist, die zwischen dem Ground-Anschluß (20) und dem Synchronisieranschluß (24) der Steuerschaltung (2) geschaltet ist.

5. Schaltungsanordnung nach Anspruch 4, dadurch gekennzeichnet, daß die Hilfsquelle (30) einen Speicherkondensator (8) aufweist.

6. Schaltungsanordnung nach Anspruch 5, dadurch gekennzeichnet, daß der Speicherkondensator (30) durch die Netzspannung ladbar ist.

7. Schaltungsanordnung nach einem der vorhergehenden Ansprüche, dadurch gekennzeichnet, daß der Synchronisierwiderstand (5) mit der Anode des Halbleiterschalters (3) verbunden ist.

8. Schaltungsanordnung nach einem der vorhergehenden Ansprüche, dadurch gekennzeichnet, daß die Steuerschaltung (2) zur Steuerung eines Elektromotors in einem Elektrowerkzeug, vorzugsweise einem Elektrohandwerkzeug, verwendbar ist.

9. Schaltungsanordnung nach einem der vorhergehenden Ansprüche, dadurch gekennzeichnet, daß zwei über Netzklemmen (13, 14) antiseriell geschaltete Dioden (17, 18) vorgesehen sind, über deren Mittenabgriff die Steuerschaltung (2) versorgbar ist.

## Claims

1. Circuit arrangement for the control of a universal motor using an alternating voltage power supply, having a semiconductor switch, preferably a triac, which is arranged in the load circuit of the universal motor and the control input of which is connected to the output of a control circuit, which is constructed as an integrated circuit and is designed for the purpose of phase gating control for the universal motor, it being possible to apply the control signal for the control circuit between a control input and a ground connection of the control circuit, and which control circuit has a synchronization input, which is connected to a phase of the alternating voltage power supply via a synchronization resistor, and having a regulating circuit for regulating the rotational speed of the universal motor, characterized in that the control signal can be directly tapped at the motor (1) as the armature voltage, in that the ground connection (20) of the control circuit (2) is connected to an internal earth point (25) of the circuit arrangement, which point is situated in the load circuit between the semiconductor switch (3) and the armature (M) of the universal motor (1), and in that the semiconductor switch (3) is operated inversely, it being connected by its cathode (K) to the internal earth point (25).

2. Circuit arrangement according to Claim 1, characterized in that there is provided a control voltage tap (31), which is arranged between the armature (M) and the field winding (11) or (12).

3. Circuit arrangement according to one of the preceding claims, characterized in that a measuring resistor (10) is connected between the universal motor (1) and the cathode (K) of the semiconductor switch (3).

4. Circuit arrangement according to one of the preceding claims, characterized in that there is provided an auxiliary source (30), which is connected between the ground connection (20) and the synchronization connection (24) of the control circuit (2).

5. Circuit arrangement according to Claim 4, characterized in that the auxiliary source (30) has a storage capacitor (8).

6. Circuit arrangement according to Claim 5, characterized in that the storage capacitor (8) can be charged by the power supply voltage.

7. Circuit arrangement according to one of the preceding claims, characterized in that the synchronization resistor (5) is connected to the anode of the semiconductor switch (3).

8. Circuit arrangement according to one of the preceding claims, characterized in that the control circuit (2) can be used for the control of an electric motor in an electric tool, preferably a hand-held electric tool.

9. Circuit arrangement according to one of the preceding claims, characterized in that there are provided two diodes (17, 18), which are connected anti-serially via power supply terminals (13, 14) and the centre tap of which can be used to supply the control circuit (2).

## Revendications

1. Système de commande d'un moteur universel alimenté par un réseau à courant alternatif, dans lequel :
- un contacteur à semi-conducteur, de préférence un triac, est monté dans le circuit de puissance du moteur et son entrée de commande est reliée à la sortie d'un circuit de commande de type intégré,
- le circuit de commande agit sur le moteur par réglage de phase, le signal destiné au circuit de commande pouvant être créé entre l'entrée de commande et le raccord de masse du circuit de commande,
- le circuit de commande possède une entrée de synchronisation reliée par une résistance de synchronisation à une phase du réseau alternatif et à un circuit de régulation de la vitesse de rotation du moteur, système caractérisé en ce que :
- le signal de commande peut être pris directement sur le moteur (1), sous forme de tension d'induit,
- le raccord de masse (20) du circuit de commande (2) est relié à une masse (25) interne à l'ensemble des circuits et située dans le circuit de puissance entre le contacteur à semi-conducteur (3) et l'induit (M) du moteur universel (1),
- l'interrupteur (3) fonctionne en sens inverse, sa cathode (K) étant reliée à la masse interne (25).

2. Système de commande selon la revendication 1, caractérisé en ce qu'il comporte une prise de tension de commande (31) située entre l'induit (M) et l'enroulement de champ (11) ou (12).

3. Système de commande selon l'une des revendications précédentes, caractérisé en ce qu'une résistance de mesure (10) est montée entre le moteur universel (1) et la cathode (K) de l'interrupteur (3).

4. Système de commande selon l'une des revendications précédentes, caractérisé en ce qu'il comporte une source auxiliaire (30) montée entre le raccord de masse (20) et le raccord de synchronisation (24) du circuit de commande (2).

5. Système de commande selon la revendication 4, caractérisé en ce que la source auxiliaire (30) comporte un condensateur de stockage (8).

6. Système de commande selon la revendication 4, caractérisé en ce que le condensateur de stockage (30) peut être alimenté par la tension du réseau.

7. Système de commande selon l'une des revendications précédentes, caractérisé en ce que la résistance de synchronisation (5) est reliée à l'anode du contacteur à semi-conducteur (3).

8. Système de commande selon l'une des revendications précédentes, caractérisé en ce que le circuit de commande (2) peut être utilisé pour commander le moteur d'un outillage électrique, de préférence un outil à main.

9. Système de commande selon une des revendications précédentes, caractérisé en ce qu'il comporte deux diodes (17, 18) montées en sens inverses sur les bornes (13, 14) du réseau et pouvant alimenter par leur sortie médiane le circuit de commande (2).
